# EUROPEAN PATENT APPLICATION

(11) **EP 4 851 494 A2**
(43) Date of publication of application: **09.12.2026**
(21) Application number: 26213609.6
(22) Date of filing: 22.10.2026
(51) Int. Cl.: F16H 37/04, B60K 17/04, F16H 3/093

(54) **ELECTRIC DRIVE AXLE AND METHOD FOR CONTROLLING ELECTRIC DRIVE AXLE**

(30) Priority: 28.11.2025 CN 202511771903
(71) Applicant: Weichai Power Co., Ltd., Weifang, Shandong 261061 (CN)
(72) Inventor: WANG, Decheng, Shandong, 261061 (CN); GUO, Shenggang, Shandong, 261061 (CN); SUN, Nannan, Shandong, 261061 (CN); ZHU, Guixiang, Shandong, 261061 (CN); YANG, Hailong, Shandong, 261061 (CN); ZHANG, Haiyan, Shandong, 261061 (CN); FENG, Ruixiang, Shandong, 261061 (CN); WANG, Fei, Shandong, 261061 (CN); TIAN, Haiyong, Shandong, 261061 (CN); CHEN, Kai, Shandong, 261061 (CN)
(74) Representative: Epping - Hermann - Fischer

(57) **Abstract**

An electric drive axle and a method for controlling an electric drive axle are provided. The electric drive axle includes a first power mechanism, a first power distribution mechanism, a second power distribution mechanism, a second intermediate shaft, a first shift mechanism, and a second shift mechanism. The second shift mechanism is disposed on the second intermediate shaft. The second intermediate shaft is connected to a drive shaft. The first shift mechanism is in driving connection with the drive shaft. The first power distribution mechanism distributes power from the first power mechanism with first speed reduction to the second power distribution mechanism, and the second power distribution mechanism distributes power with second speed reduction to the second shift gear of the second shift mechanism or to the first shift mechanism.

## Description

### FIELD

The present application relates to the technical field of vehicles and, in particular, to an electric drive axle and a method for controlling an electric drive axle.

### BACKGROUND

With the rapid development of electrification in medium-duty and heavy-duty commercial vehicles, the adoption of electric drive axle systems has become a mainstream solution. In the related art, to meet the demand for substantial wheel-side traction force in heavy-duty commercial vehicles, relatively high-torque motors are employed, leading to high cost associated with the motors.

Therefore, how to solve the problem of high cost of the electric drive axle has become a technical issue that needs to be addressed by those skilled in the art.

### SUMMARY

An electric drive axle is provided according to the present application, which can solve the problem of high cost of the electric drive axle. A method for controlling the electric drive axle described above is further provided according to the present application.

To achieve the above object, an electric drive axle is provided according to the present application, axle, which includes a first power mechanism, a first power distribution mechanism, a second power distribution mechanism, a second intermediate shaft, a first shift mechanism, and a second shift mechanism.

The first power distribution mechanism is configured to distribute power from the first power mechanism with speed reduction to the second power distribution mechanism and to a first shift gear of the second shift mechanism.

The second power distribution mechanism is configured to distribute power with speed reduction to the first shift mechanism and to a second shift gear of the second shift mechanism. The first shift mechanism is configured to transmit power to a drive shaft. The second shift mechanism is mounted on the second intermediate shaft that is in driving connection with the drive shaft.

The first power distribution mechanism and the second power distribution mechanism are configured to provide an output of power with speed reductions.

Optionally, in the electric drive axle described above, the first power distribution mechanism includes an intermediate gear, a first gear, and a second gear.

The first power mechanism is in driving connection with the intermediate gear.

Both the first gear and the second gear are meshed with the intermediate gear, the first gear is in driving connection with the second power distribution mechanism, and the second gear is in driving connection with the first shift gear of the second shift mechanism.

Optionally, in the electric drive axle described above, the intermediate gear, the first gear, and the second gear are arranged such that their axes are parallel to one another, the intermediate gear is located between the first gear and the second gear, the first gear is arranged to mesh with the intermediate gear on one axial side of the intermediate gear, and the second gear is arranged to mesh with the intermediate gear on the other axial side of the intermediate gear. Alternatively, along an axial direction of the intermediate gear, the first gear and the second gear are arranged with axial offset relative to each other, and an axial width of the intermediate gear is at least equal to the sum of axial widths of the first gear and the second gear.

Optionally, in the electric drive axle described above, the first power distribution mechanism includes an intermediate gear, a first gear, and a second gear.

Along an axial direction of an output shaft of the first power distribution mechanism, the intermediate gear and the first gear are arranged side-by-side. The intermediate gear is in driving connection with the second gear, and the first gear is in driving connection with an input end of the second power distribution mechanism.

Optionally, in the electric drive axle described above, the first power distribution mechanism is in driving connection with the second power distribution mechanism via a sixth speed reduction mechanism.

Optionally, in the electric drive axle described above, the second power distribution mechanism includes a first intermediate shaft and a second speed reduction mechanism.

The first intermediate shaft is in driving connection with the first power distribution mechanism.

The second speed reduction mechanism is in driving connection with the first intermediate shaft and the second shift gear of the second shift mechanism.

The first shift mechanism is disposed on the first intermediate shaft, or a first speed reduction mechanism is disposed on the first intermediate shaft and is connected to the first shift mechanism.

Optionally, in the electric drive axle described above, the second intermediate shaft is arranged parallel to the drive shaft and is connected to the drive shaft via a fifth speed reduction mechanism.

Alternatively, the second intermediate shaft is mounted around the drive shaft and is connected to the drive shaft via a planetary gear speed reduction mechanism.

Alternatively, the first power mechanism is in driving connection with the first power distribution mechanism via a third speed reduction mechanism.

Optionally, the electric drive axle described above further includes a second power mechanism configured to output power to the second power distribution mechanism or the first power distribution mechanism.

Alternatively, the electric drive axle described above further includes a third power mechanism and a fourth speed reduction mechanism. The third power mechanism is connected to an input end of the fourth speed reduction mechanism, and an output end of the fourth speed reduction mechanism is connected to the drive shaft.

Alternatively, the electric drive axle described above further includes a fourth power mechanism, a third shift mechanism, and a third intermediate shaft. The third intermediate shaft is provided with the third shift mechanism, and the third shift mechanism has a shift gear that is in driving connection with the drive shaft.

The fourth power mechanism is in driving connection with the shift gear of the third shift mechanism.

In a second aspect, a method for controlling an electric drive axle as described in any of the above solutions. Operating modes of the electric drive axle includes a driving mode.

An eACU controls the electric drive axle to operate in the driving mode.

The eACU controls, based on current vehicle speed and torque, a first shift element of the second shift mechanism and a second shift element of the first shift mechanism of the electric drive axle to perform gear shifting.

To engage first gear, the second shift gear of the second shift mechanism is engaged with the first shift element of the second shift mechanism.

To engage second gear, the second shift gear is disengaged from the first shift element, while the second shift element of the first shift mechanism is engaged with a third shift gear of the first shift mechanism.

To engage third gear, the second shift element is disengaged from the third shift gear, and the first shift gear of the second shift mechanism is engaged with the first shift element.

Optionally, in the method for controlling the electric drive axle described above, the electric drive axle further includes an escape mode.

The electric axle control unit controls the electric drive axle to operate in the escape mode. A differential of the electric drive axle is locked, and the second shift gear of the second shift mechanism is engaged with the first shift element of the second shift mechanism, to engage first gear.

The eACU controls a motor controller to operate in a speed mode. The eACU determines a target rotational speed based on an accelerator pedal opening and determines a rotational direction based on a rate of change of the accelerator pedal opening when the accelerator pedal is repeatedly released and depressed by a driver, and sends the target rotational speed and the rotational direction to the motor controller. The motor controller controls a rotational speed and a rotational direction of the first power mechanism of the electric drive axle, such that a vehicle having the electric drive axle moves forward and backward in a reciprocating manner.

The rate of change of the accelerator pedal opening is defined as a difference in the accelerator pedal opening between adjacent release/depress operations. When the rate of change of the accelerator pedal opening is positive, the rotational direction of the first power mechanism is defined as a first direction, and when the rate of change of the accelerator pedal opening is negative, the rotational direction of the first power mechanism is defined as a second direction. The first direction and the second direction are opposite.

Optionally, the method for controlling the electric drive axle described above further includes establishing a relationship table between the accelerator pedal opening and the target rotational speed, and storing it in the eACU.

The method for controlling the electric drive axle described above further includes determining the target rotational speed, specifically, determining the target rotational speed by the eACU based on the relationship table between the accelerator pedal opening and the target rotational speed.

Optionally, in the method for controlling the electric drive axle described above, when a wheel-ground adhesion force during backward movement is greater than that during forward movement, reverse gear is engaged.

When the wheel-ground adhesion force during backward movement is less than that during forward movement, forward gear is engaged.

Optionally, in the method for controlling the electric drive axle described above, the electric drive axle further includes an energy recovery mode.

The eACU controls the electric drive axle to operate in the energy recovery mode when a vehicle having the electric drive axle decelerates.

Based on motor speed and torque in current gear, motor speeds and torques for other gears are determined.

Based on a motor efficiency MAP, motor efficiencies corresponding to the motor speeds and torques for different gears are determined.

A battery SOC is determined, and a gear is selected.

The eACU repeats the determining motor speeds and torques for other gears, the determining motor efficiencies corresponding to motor speeds and torques for different gears, and the determining a battery state of charge and selecting a gear once every at least one control step.

Optionally, in the method for controlling the electric drive axle described above, when the battery SOC is less than a first preset value, a gear with highest motor efficiency is selected; and when the battery SOC is greater than or equal to the first preset value, a gear with lowest motor efficiency is selected.

Optionally, in the method for controlling the electric drive axle described above, the electric drive axle further includes a park mode.

The eACU controls the electric drive axle to operate in the park mode.

The eACU controls the second shift element of the first shift mechanism to engage the third shift gear.

The eACU controls the first shift element of the second shift mechanism to engage the first shift gear or the second shift gear.

An electric drive axle is provided in the embodiments of the present application, the electric drive axle includes a first power mechanism, a first power distribution mechanism, a second power distribution mechanism, a second intermediate shaft, a first shift mechanism, and a second shift mechanism. The second shift mechanism is disposed on the second intermediate shaft. The second intermediate shaft is connected to a drive shaft. The first shift mechanism is in driving connection with the drive shaft. The first power distribution mechanism distributes power from the first power mechanism with first speed reduction to the second power distribution mechanism, and the second power distribution mechanism distributes power with second speed reduction to the second shift gear of the second shift mechanism or to the first shift mechanism. In other words, the power from the first power mechanism is output externally with speed reductions by the first and second power distribution mechanisms, resulting in reduced speed and increased output torque. This allows for high-torque output using a relatively low-torque motor, effectively reducing cost compared with the related art employing a high-torque motor.

A method for controlling an electric drive axle is further provided according to the present application, which is applicable to the electric drive axle described in any of the above solutions. Since the electric drive axle has the aforementioned technical effects, the method for controlling the electric drive axle also has the same technical effects, which will not be repeated here.

### BRIEF DESCRIPTION OF THE DRAWINGS

For more clearly illustrating embodiments of the present application or technical solutions in the conventional technology, drawings referred to describe the embodiments or the conventional technology will be briefly described hereinafter. Apparently, the drawings in the following description show only some examples of the present application, and for those skilled in the art, other drawings may be determined based on the provided drawings without any creative efforts. Furthermore, the present application may be applied to other similar scenarios based on the provided drawings. Unless clearly indicated by the context or otherwise specified, identical reference numerals in the drawings represent identical structures or operations.
FIG. 1 is a schematic structural view of an electric drive axle according to a first embodiment of the present application;
FIG. 2 is a schematic structural view of an electric drive axle according to a second embodiment of the present application;
FIG. 3 is a schematic structural view of an electric drive axle according to a third embodiment of the present application;
FIG. 4 is a schematic structural view of an electric drive axle according to a fourth embodiment of the present application;
FIG. 5 is a schematic structural view of an electric drive axle according to a fifth embodiment of the present application;
FIG. 6 is a schematic structural view of an electric drive axle according to a sixth embodiment of the present application;
FIG. 7 is a schematic structural view of an electric drive axle according to a seventh embodiment of the present application;
FIG. 8 is a schematic structural view of an electric drive axle according to an eighth embodiment of the present application;
FIG. 9 is a schematic structural view of an electric drive axle according to a ninth embodiment of the present application;
FIG. 10 is a schematic structural view of an electric drive axle according to a tenth embodiment of the present application;
FIG. 11 is a schematic structural view of an electric drive axle according to an eleventh embodiment of the present application;
FIG. 12 is a schematic structural view of an electric drive axle according to a twelfth embodiment of the present application;
FIG. 13 is a schematic structural view of an electric drive axle according to a thirteenth embodiment of the present application;
FIG. 14 is a schematic structural view of an electric drive axle according to a fourteenth embodiment of the present application;
FIG. 15 is a schematic structural view of an electric drive axle according to a fifteenth embodiment of the present application;
FIG. 16 is a schematic structural view of an electric drive axle according to a sixteenth embodiment of the present application; and
FIG. 17 is a schematic structural view of an electric drive axle according to a seventeenth embodiment of the present application.

Reference numerals in the figures are listed as follows:

| | | | |
|---|---|---|---|
| 1. | drive shaft; | 2. | first power mechanism; |
| 3. | first shift mechanism; | 31. | second shift element; |
| 4. | second shift mechanism; | 41. | first shift gear; |
| 42. | second shift gear; | 43. | first shift element; |
| 5. | first intermediate shaft; | 6. | second speed reduction mechanism; |
| 7. | intermediate gear; | 8. | first gear; |
| 9. | second gear; | 10. | second intermediate shaft; |
| 11. | second power mechanism; | 12. | third power mechanism; |
| 13. | fourth power mechanism; | 14. | third shift mechanism; |
| 15. | third intermediate shaft; | 16. | wheel-side reducer; |
| 17. | differential; | 18. | third speed reduction mechanism; |
| 19. | first speed reduction mechanism; | 20. | fourth speed reduction mechanism; |
| 21. | fifth speed reduction mechanism; | 22. | sixth speed reduction mechanism; |
| 23. | first input gear; | 24. | first output gear; |
| 25. | first shaft; | 26. | second output gear; |
| 27. | second input gear. | | |

### DETAILED DESCRIPTION OF THE EMBODIMENTS

Hereinafter, the present application will be further described in detail with reference to the accompanying drawings by means of the embodiments. It can be understood that specific embodiments described herein are only configured to explain related parts of the present application, but not to limit the present application. The described embodiments are only part, rather than all, of the embodiments of the present application. All other embodiments obtained by those skilled in the art based on the embodiments of the present application without any creative efforts shall fall within the scope of protection of the present application.

It should be noted that for easy of description, the drawings merely show the related parts of the present application. The embodiments and features of the embodiments in the present application may be combined with each other, as long as no conflict is to be caused.

It should be understood that terms "system", "device", "unit", and/or "module" used in the present application are configured to distinguish assemblies, elements, components, parts, or of different levels. However, if other expressions can realize the same purpose, they may be replaced by other expressions.

As shown in the present application and the claims, the words "a", "an", "one" and/or "this" are not specifically referring to the singular, but may also include the plural, unless the context clearly indicates exceptions. Generally, the terms "include" and "include" only indicate that the steps and elements that have been clearly identified are included, and these steps and elements do not constitute an exclusive list. The method or device may further include other steps or elements. The elements limited by the statement "including (including) a..." do not exclude the existence of other identical elements exist in the process, method, product or device that includes the elements.

In the description of the embodiments of the present application, unless otherwise specified, "/" means or, for example, A/B may mean A or B. The "and/or" herein is only an association relationship that describes the associated objects, which means that there may be three kinds of relationships, for example, A and/or B may mean that there are three cases: A alone, A and B at the same time, and B alone. In addition, in the description of the embodiments of the present application, "multiple" refers to two or more.

The terms "first" and "second" are only used for descriptive purposes, and cannot be understood as indicating or implying relative importance or implicitly indicating the number of indicated technical features. Therefore, the features defined by "first" and "second" may explicitly or implicitly include one or more of the features.

In a first aspect, an electric drive axle is provided according to the present application, which includes a first power mechanism 2, a first power distribution mechanism, a second power distribution mechanism, a second intermediate shaft 10, a first shift mechanism 3, and a second shift mechanism 4.

Power from the first power mechanism 2 is ultimately transmitted to a drive shaft 1 (the drive shaft 1 includes two half-shafts), thereby causing the drive shaft 1 to drive driving wheels to rotate.

The power from the first power mechanism 2 is first distributed by the first power distribution mechanism to the second power distribution mechanism and to a first shift gear 41 of the second shift mechanism 4.

The second power distribution mechanism is configured to distribute power to the first shift gear 41 and a second shift gear 42 of the second shift mechanism 4.

The second shift mechanism 4 is disposed on the second intermediate shaft 10. The second shift mechanism 4 is a bidirectional shift mechanism. The second shift mechanism 4 includes the first shift gear 41, the second shift gear 42, and a first shift element 43. The first shift gear 41 and the second shift gear 42 are loosely mounted around the second intermediate shaft 10. The first shift gear 41 and the second shift gear 42 idle on the second intermediate shaft 10. The first shift element 43 is slidably connected to the second intermediate shaft 10 and rotates synchronously with the second intermediate shaft 10. When the first shift element 43 is engaged with the first shift gear 41, power from the first shift gear 41 is transmitted to the second intermediate shaft 10 via the first shift element 43; and when the first shift element 43 is engaged with the second shift gear 42, power from the second shift gear 42 is transmitted to the second intermediate shaft 10 via the first shift element 43.

The second intermediate shaft 10 is in driving connection with the drive shaft 1. The second intermediate shaft 10 is configured to transmit power to the drive shaft 1, which in turn drives the driving wheels to rotate.

The first shift mechanism 3 is configured to transmit power to the drive shaft 1.

In the electric drive axle provided in this solution, the power from the first power mechanism 2 is divided into two parts by the first power distribution mechanism: one part transmitted to the first shift gear 41 of the second shift mechanism 4, and the other part transmitted to the second power distribution mechanism. Power passing through the second power distribution mechanism is further divided into two parts: one part transmitted to the second shift gear 42 of the second shift mechanism 4, and the other part transmitted to the first shift mechanism 3.

The electric drive axle provided in this solution includes the first shift mechanism 3 and the second shift mechanism 4, which are arranged in parallel in a power transmission direction. Taking the first shift mechanism 3 as a unidirectional shift mechanism and the second shift mechanism 4 as a bidirectional shift mechanism as an example for explanation, the first shift element 43 of the second shift mechanism 4 engages the first shift gear 41 to achieve first gear, or engages the second shift gear 42 to achieve second gear, and a second shift element 31 of the first shift mechanism 3 engages a third shift gear to achieve third gear.

In the electric drive axle provided in this solution, power output occurs only through either the first shift mechanism 3 or the second shift mechanism 4. That is, during gear shifting, only the shift element of one shift mechanism is engaged, which reduces shift time compared with approaches requiring simultaneous operation of shift elements of two shift mechanisms.

In the electric drive axle provided in this solution, the power from the first power mechanism 2 is distributed through the first power distribution mechanism and the second power distribution mechanism, enabling partial power distribution to different shift gears of the second shift mechanism 4 and to the first shift mechanism 3. The first power mechanism 2 is shared by both the first shift mechanism 3 and the second shift mechanism 4, simplifying the structure of the electric drive axle compared with the related art requiring separate first power mechanisms 2 for each shift mechanism to achieve multiple gears.

In the electric drive axle provided in this solution, when the power from the first power mechanism 2 is distributed by the first power distribution mechanism, part of the power is transmitted directly to the first shift gear 41 of the second shift mechanism 4, resulting in a shortest power transmission path.

The first power distribution mechanism and the second power distribution mechanism are configured to achieve an output of power with speed reduction. The power from the first power mechanism 2 is distributed to the second power distribution mechanism after being subjected to a first speed reduction by the first power distribution mechanism, and then is distributed to the second shift gear 42 of the second shift mechanism 4 or to the first shift mechanism 3 after being subjected to a second speed reduction by the second power distribution mechanism. In other words, the power from the first power mechanism 2 is output externally after being subjected to speed reductions by the first and second power distribution mechanisms, resulting in reduced speed and increased output torque. This allows for high-torque output using a relatively low-torque motor, effectively reducing cost compared with the related art employing a high-torque motor.

In some embodiments, the first power distribution mechanism includes an intermediate gear 7, a first gear 8, and a second gear 9.

The first power mechanism 2 is in driving connection with the intermediate gear 7 and both the first gear 8 and the second gear 9 are meshed with the intermediate gear 7.

The first gear 8 is in driving connection with the second power distribution mechanism, and the second gear 9 is in driving connection with the first shift gear 41.

During operation, power from the first power mechanism 2 is transmitted to the intermediate gear 7, and then transmitted to the first gear 8 and the second gear 9 via the intermediate gear 7, realizing that one part of the power from the first power mechanism 2 is transmitted to the second power distribution mechanism through the first gear 8, and the other part is transmitted to the first shift gear 41 through the second gear 9.

The first gear 8, the second gear 9, and the intermediate gear 7 are arranged such that their axes are parallel to one another. The intermediate gear 7 is located between the first gear 8 and the second gear 9. The first gear 8 is arranged to mesh with the intermediate gear on one axial side of the intermediate gear 7, and the second gear 9 is arranged to mesh with the intermediate gear 7 on the other axial side of the intermediate gear 7. This design achieves power splitting while maximizing the use of the axial space of the intermediate gear 7, resulting in a more compact structure.

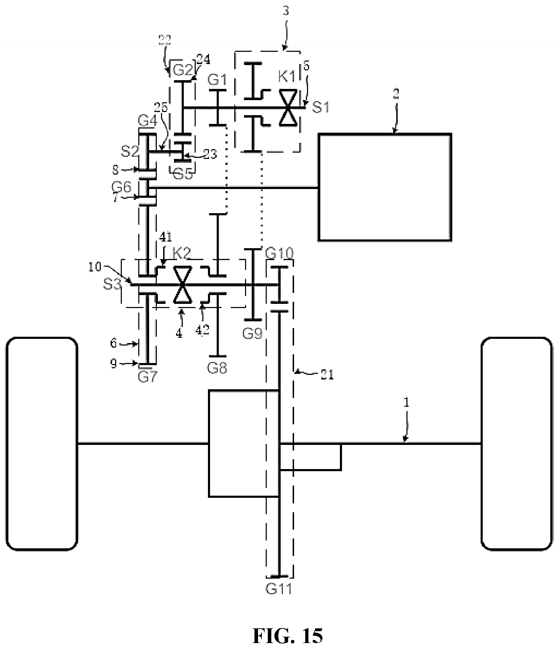

Optionally, as shown in FIG. 15, along an axial direction of the intermediate gear 7, a width of the intermediate gear 7 is equal to the width of the first gear 8 or the second gear 9.

Equal tooth widths ensure that, during meshing, tooth surfaces of the intermediate gear 7 and the first gear 8, as well as those of the intermediate gear 7 and the second gear 9, are in full contact, achieving maximum end-face overlap and reducing impact and noise during gear meshing; moreover, while ensuring contact fatigue life, this design achieves optimal material utilization and system light weighting.

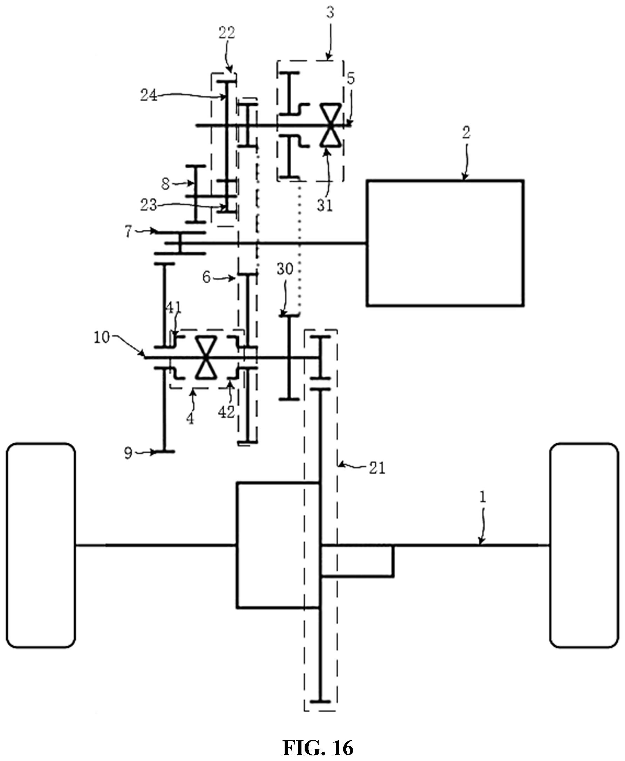

Optionally, as shown in FIG. 16, along an axial direction of the intermediate gear 7, the first gear 8 and the second gear 9 are arranged with axial offset relative to each other, and an axial width of the intermediate gear 7 is at least equal to the sum of axial widths of the first gear 8 and the second gear 9. The intermediate gear 7 is a wide-tooth gear.

In this embodiment, by having the wide-tooth gear mesh with the first gear 8 and the second gear 9 at different axial positions, two meshing points-which would otherwise need to be arranged side-by-side radially-are shifted to positions offset axially one behind the other. This allows for an increase in axial dimensions and a reduction in radial dimensions to meet various dimensional constraints.

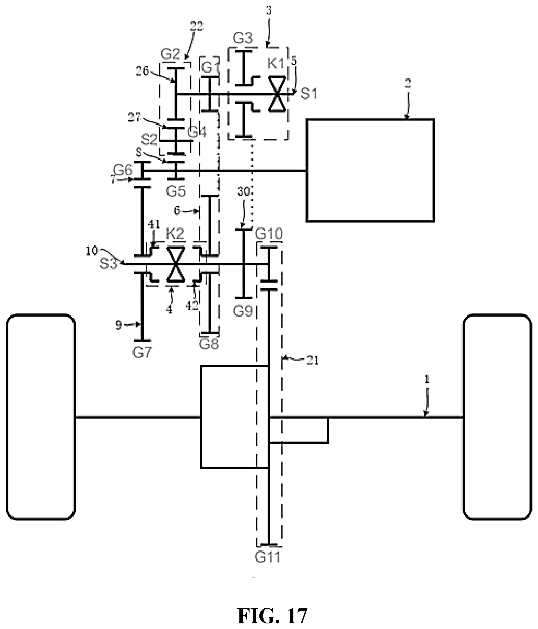

In other embodiments of the present application, the first power distribution mechanism includes an intermediate gear 7, a first gear 8, and a second gear 9. As shown in FIG. 17, along an axial direction of an output shaft of the first power mechanism 2, the intermediate gear 7 and the first gear 8 are arranged side-by-side. The intermediate gear 7 is in driving connection with the second gear 9, and the first gear 8 is in driving connection with an input end of the second power distribution mechanism.

The power from the first power distribution mechanism is split at the same shaft cross-section, enabling the switching between different gear ratios so that power can be flexibly distributed to different actuators or output ports.

The side-by-side gear meshing design helps mitigate meshing impact by adjusting the gear overlap, thereby reducing noise and vibration during the transmission process.

The structure of the power distribution mechanism is not limited to the above embodiment and may include other structures capable of achieving power distribution, all of which fall within the scope of protection of the present application.

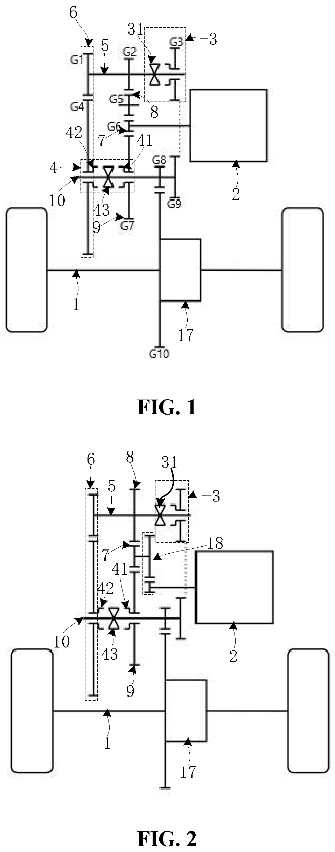

In some embodiments, as shown in FIG. 1, the first power mechanism 2 is directly connected to the intermediate gear 7. In an embodiment where the first power mechanism 2 is a motor, the intermediate gear 7 is mounted on an output shaft of the motor.

In other embodiments, as shown in FIG. 2, the first power mechanism 2 is connected to the intermediate gear 7 via a third speed reduction mechanism 18. The third speed reduction mechanism 18 includes a power input end and a power output end. The power input end is connected to the first power mechanism 2, and the power output end is connected to the intermediate gear 7.

The third speed reduction mechanism 18 includes at least one of a cylindrical gear speed reduction mechanism and a planetary gear speed reduction mechanism.

As shown in FIG. 2, in an embodiment where the third speed reduction mechanism 18 is a cylindrical gear speed reduction mechanism, the cylindrical gear speed reduction mechanism includes a driving gear, a driven gear, and a connecting shaft. The driving gear is connected to the first power mechanism 2, the driving gear is meshed with the driven gear, and the driven gear is connected to the second intermediate shaft 10 via the connecting shaft.

The connection between the first power mechanism 2 and the intermediate gear 7 is not limited to the above embodiment and may include other structural forms capable of achieving power transmission, all of which fall within the scope of protection of the present application.

Two forms of the second power distribution mechanism are provided in the present application.

In a first form, as shown in FIG. 1, the second power distribution mechanism includes the first intermediate shaft 5 and the second speed reduction mechanism 6.

The first intermediate shaft 5 is connected to the first power distribution mechanism. Specifically, the first intermediate shaft 5 is connected to the first gear 8 of the first power distribution mechanism.

The power from the first intermediate shaft 5 is transmitted to the second shift gear 42 of the second shift mechanism 4 via the second speed reduction mechanism 6. Specifically, an input end of the second speed reduction mechanism 6 is connected to the first intermediate shaft 5, and an output end of the second speed reduction mechanism 6 is connected to the second shift gear 42 of the second shift mechanism 4.

The first shift mechanism 3 is mounted on the first intermediate shaft 5. The power from the first intermediate shaft 5 is transmitted directly to the first shift mechanism 3. The first shift mechanism 3 may be a unidirectional shift mechanism or a bidirectional shift mechanism. This solution provides an embodiment where the first shift mechanism 3 is a unidirectional shift mechanism. The first shift mechanism 3 includes a shift gear and a shift element. The shift gear is loosely mounted around the first intermediate shaft 5 and idles on it. The shift element is slidably connected to the first intermediate shaft 5, such that the shift element can slide along an axial direction of the first intermediate shaft 5, and can rotate synchronously with the first intermediate shaft 5. When the shift element of the first shift mechanism 3 is not engaged with the shift gear of the first shift mechanism 3, the power from the first intermediate shaft 5 cannot be transmitted to the shift gear via the shift element. When the shift element is engaged with the shift gear, the power from the first intermediate shaft 5 is transmitted to the shift gear via the shift element.

In this embodiment, the shift gear of the first shift mechanism 3 is connected to the drive shaft 1 or the second intermediate shaft 10 via a first speed reduction mechanism 19.

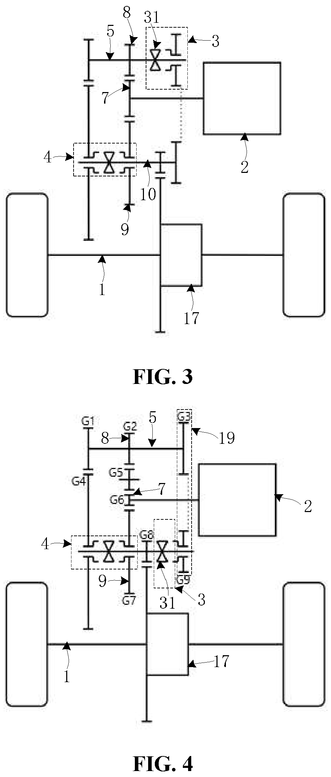

In a second form, as shown in FIG. 4, the second power distribution mechanism includes the first intermediate shaft 5, the first speed reduction mechanism 19, and the second speed reduction mechanism 6.

The first intermediate shaft 5 is connected to the first power distribution mechanism. Specifically, the first intermediate shaft 5 is connected to the first gear 8 of the first power distribution mechanism.

The power from the first intermediate shaft 5 is distributed to the second speed reduction mechanism 6 and the first speed reduction mechanism 19, and then transmitted to the second shift gear 42 of the second shift mechanism 4 and the first shift mechanism 3, respectively, via the second speed reduction mechanism 6 and the first speed reduction mechanism 19.

The power from the first intermediate shaft 5 is transmitted to the second shift gear 42 of the second shift mechanism 4 via the second speed reduction mechanism 6, and the power from the first intermediate shaft 5 is transmitted to the first shift mechanism 3 via the first speed reduction mechanism 19.

The first shift mechanism 3 may be a unidirectional shift mechanism or a bidirectional shift mechanism. This solution provides an embodiment where the first shift mechanism 3 is a unidirectional shift mechanism. The first shift mechanism 3 includes a shift gear and a shift element. The shift gear is loosely mounted around the first intermediate shaft 5 and idles on it. The shift element is slidably connected to the first intermediate shaft 5, such that the shift element can slide along the axis direction of the first intermediate shaft 5, and can rotate synchronously with the first intermediate shaft 5. When the shift element of the first shift mechanism 3 is not engaged with the shift gear of the first shift mechanism 3, the power from the first intermediate shaft 5 cannot be transmitted to the shift gear via the shift element. When the shift element is engaged with the shift gear, the power from the first intermediate shaft 5 is transmitted to the shift gear via the shift element.

The second power distribution mechanism is not limited to the two forms described above and may include other structures capable of achieving power distribution, all of which fall within the scope of protection of the present application.

In an embodiment where the second power distribution mechanism includes the first intermediate shaft 5, the first speed reduction mechanism 19, and the second speed reduction mechanism 6, the first shift mechanism 3 may be located on the second intermediate shaft 10 or on the drive shaft 1.

The connection between the first intermediate shaft 5 and the first gear 8 of the first power distribution mechanism includes following forms.

In a first form, as shown in FIG. 1, a third gear for meshing with the first gear 8 is disposed on the first intermediate shaft 5. The first gear 8 is meshed with the third gear to achieve transmission connection with the first intermediate shaft 5.

In a second form, as shown in FIG. 2, the first gear 8 is directly mounted around the first intermediate shaft 5, and the first gear 8 directly drives the first intermediate shaft 5 to rotate.

The transmission connection form between the first gear 8 and the first intermediate shaft 5 is not limited to the above embodiment and may include other forms, which are not specifically limited here.

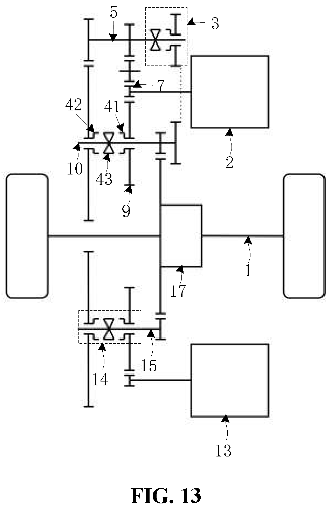

As shown in FIGS. 1 to 14, the first intermediate shaft 5 and the second intermediate shaft 10 are located on opposite sides of an output shaft of the first power mechanism 2, respectively.

The first speed reduction mechanism 19 is at least one of a cylindrical gear speed reduction mechanism and a planetary gear speed reduction mechanism.

In an embodiment where the first speed reduction mechanism 19 is a cylindrical gear speed reduction mechanism, as shown in FIGS. 1 to 14, the first speed reduction mechanism 19 includes a seventh gear and an eighth gear. The seventh gear is meshed with the eighth gear. The seventh gear is connected to the first intermediate shaft 5, and the eighth gear is mounted around the shift gear of the first shift mechanism 3.

The first speed reduction mechanism 19 is not limited to the above embodiment and may include other structures capable of achieving speed reduction, all of which fall within the scope of protection of the present application.

The second speed reduction mechanism 6 includes at least one of a cylindrical gear speed reduction mechanism and a planetary gear speed reduction mechanism.

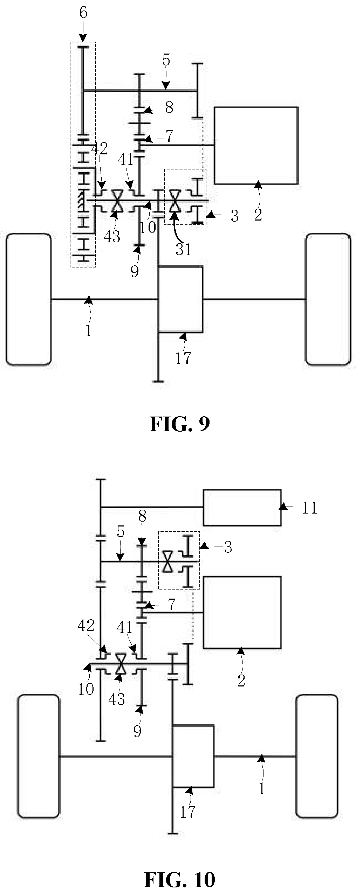

As shown in FIG. 9, the second speed reduction mechanism 6 includes a ninth gear, a tenth gear, and a planetary gear speed reduction mechanism. The ninth gear is mounted on the first intermediate shaft 5. The planetary gear speed reduction mechanism includes a ring gear and a planet carrier. The tenth gear is mounted around the ring gear, the tenth gear is meshed with the ninth gear, and the planet carrier is connected to the second shift gear 42 of the second shift mechanism 4.

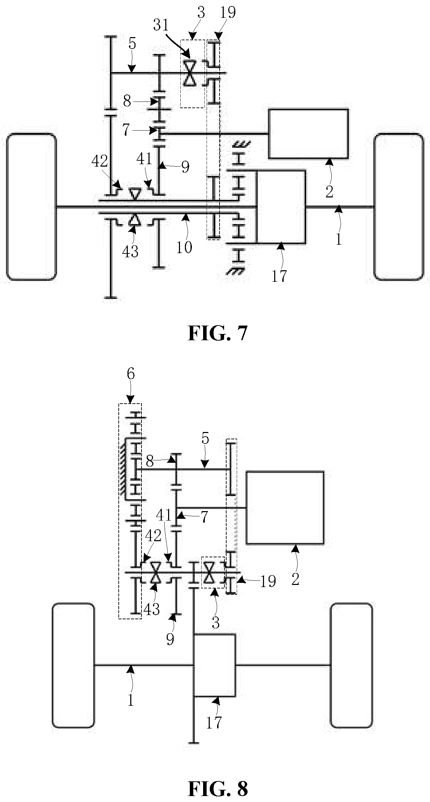

As shown in FIG. 8, the second speed reduction mechanism 6 includes a ninth gear, a tenth gear, and a planetary gear speed reduction mechanism. The ninth gear is connected to the second shift gear 42. The planetary gear speed reduction mechanism includes a sun gear and a ring gear. The tenth gear is mounted around the ring gear, the tenth gear is meshed with the ninth gear, and the sun gear is connected to the first intermediate shaft 5.

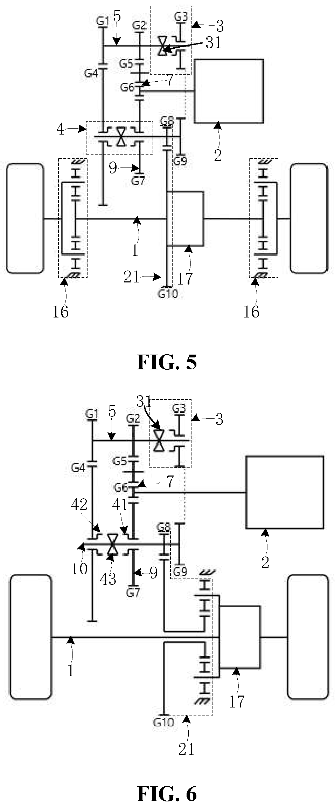

The second intermediate shaft 10 may be arranged parallel to the drive shaft 1, as shown in FIG. 6. Alternatively, the second intermediate shaft 10 may be mounted around the drive shaft 1, as shown in FIG. 7.

In an embodiment where the second intermediate shaft 10 is arranged parallel to the drive shaft 1, the second intermediate shaft 10 is in driving connection with the drive shaft 1 via a fifth speed reduction mechanism 21.

In some embodiments, as shown in FIGS. 1 to 5, the fifth speed reduction mechanism 21 includes a fifth gear and a sixth gear. The fifth gear is mounted on the second intermediate shaft 10, and the sixth gear is mounted on the drive shaft 1. The fifth gear is meshed with the sixth gear, enabling power transmission from the second intermediate shaft 10 to the drive shaft 1.

In other embodiments, as shown in FIG. 6, the fifth speed reduction mechanism 21 includes a fifth gear, a sixth gear, and a planetary gear speed reduction mechanism. The fifth gear is mounted on the second intermediate shaft 10, the sixth gear is mounted on the drive shaft 1, and the fifth gear is meshed with the sixth gear. The sun gear of the planetary gear speed reduction mechanism is mounted on the drive shaft 1. The sixth gear is connected to the sun gear of the planetary gear speed reduction mechanism. The planet carrier of the planetary gear speed reduction mechanism is connected to the drive shaft 1, or is connected to the drive shaft 1 via a differential 17.

The fifth speed reduction mechanism 21 between the second intermediate shaft 10 and the drive shaft 1 provides an additional speed reduction stage to the electric drive axle, further reducing speed to meet the demand for high torque in heavy trucks.

Additionally, the arrangement of the second intermediate shaft 10 parallel to the drive shaft 1 reduces the number of parts mounted on the drive shaft 1, facilitating the installation of the differential 17 or other structures on the drive shaft 1.

As shown in FIG. 7, the second intermediate shaft 10 is mounted around the drive shaft 1, and the second intermediate shaft 10 is connected to the drive shaft 1 via a planetary gear speed reduction mechanism. The second intermediate shaft 10 is connected to the sun gear of the planetary gear speed reduction mechanism, and the planet carrier of the planetary gear speed reduction mechanism is connected to the drive shaft 1.

The shifting and speed-changing device of the electric drive axle provided in this solution further includes a second power mechanism 11 for outputting power to the first intermediate shaft 5. Power from the second power mechanism 11 is combined with the power from the first power mechanism 2. The first power mechanism 2 and the second power mechanism 11 cooperate to output power. Relatively low-torque motors may be selected for the first and second power mechanisms according to requirements.

The second power mechanism 11 is configured to output power to the first intermediate shaft 5. This can be achieved by connecting the second power mechanism 11 to the second power distribution mechanism, or by connecting the second power mechanism 11 to the first power distribution mechanism.

The second power mechanism 11 is connected to the second power distribution mechanism. Specifically, the second power mechanism 11 is connected to the second speed reduction mechanism 6 of the second power distribution mechanism, or to the first intermediate shaft 5.

As shown in FIG. 10, the second power mechanism 11 is connected to the second speed reduction mechanism 6 of the second power distribution mechanism. Taking the second speed reduction mechanism 6 as a cylindrical gear speed reduction mechanism as an example for explanation, the second speed reduction mechanism 6 includes a fifteenth gear and a sixteenth gear. The fifteenth gear is mounted on the first intermediate shaft 5, and the sixteenth gear is mounted on the second intermediate shaft 10. The fifteenth gear is meshed with the sixteenth gear. An output end of the second power mechanism 11 is provided with a seventeenth gear, which is meshed with the fifteenth gear.

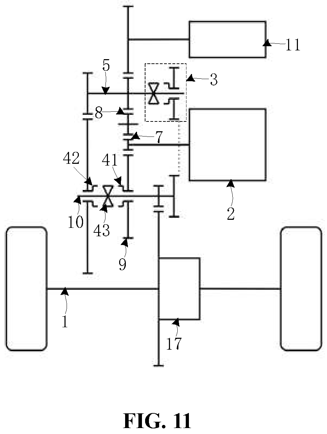

The second power mechanism 11 is connected to the first power distribution mechanism. Specifically, as shown in FIG. 11, the second power mechanism 11 is connected to the first gear 8 of the first power distribution mechanism. Specifically, an output end of the second power mechanism 11 is provided with a gear which is meshed with the first gear 8, or the second power mechanism 11 is connected to a transmission structure between the first gear 8 and the first intermediate shaft 5.

The method of power transmission from the second power mechanism 11 to the first intermediate shaft 5 is not limited to the above embodiment and may include other forms capable of achieving power superposition with the first intermediate shaft 5, all of which fall within the scope of protection of the present application.

In some embodiments, the first power mechanism 2, the first power distribution mechanism, the second power distribution mechanism, the second intermediate shaft 10, the first shift mechanism 3, and the second shift mechanism 4 are arranged on one side of the drive shaft 1.

In other embodiments, the first power mechanism 2, the first power distribution mechanism, the second power distribution mechanism, the second intermediate shaft 10, the first shift mechanism 3, and the second shift mechanism 4 are arranged symmetrically on both sides of the drive shaft 1.

Optionally, the first power mechanism 2, the first power distribution mechanism, the second power distribution mechanism, the second intermediate shaft 10, the first shift mechanism 3, and the second shift mechanism 4 are located on an X-direction side of the drive shaft 1, where the X-direction refers to a forward direction of the vehicle.

FIGS. 1 to 11 show an embodiment where the first power mechanism 2, the first power distribution mechanism, the second power distribution mechanism, the second intermediate shaft 10, the first shift mechanism 3, and the second shift mechanism 4 are arranged on one side of the drive shaft 1. Optionally, the first power mechanism 2, the first power distribution mechanism, the second power distribution mechanism, the second intermediate shaft 10, the first shift mechanism 3, and the second shift mechanism 4 are located on a negative-X side of the drive shaft 1, avoiding occupying any space on a positive-X side, thereby leaving ample space on the positive-X side of the vehicle for the placement of the power battery.

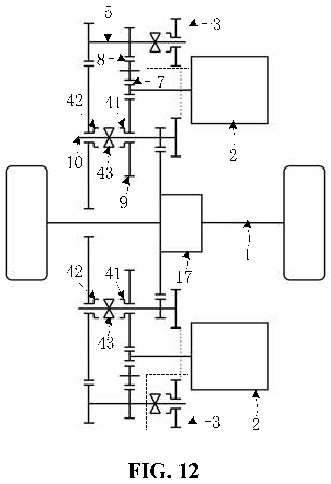

FIG. 12 shows an embodiment where the first power mechanism 2, the first power distribution mechanism, the second power distribution mechanism, the second intermediate shaft 10, the first shift mechanism 3, and the second shift mechanism 4 are arranged on both sides of the drive shaft 1. The electric drive axle occupies space on both the negative-X and positive-X sides of the drive shaft 1.

It should be noted here that positive-X is along the forward direction of the vehicle, and negative-X is opposite to the forward direction.

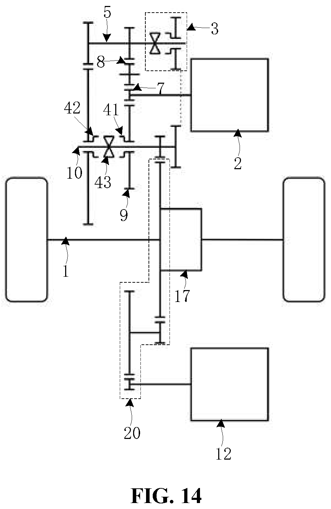

In other embodiments, as shown in FIG. 14, the first power mechanism 2, the first power distribution mechanism, the second power distribution mechanism, the second intermediate shaft 10, the first shift mechanism 3, and the second shift mechanism 4 are arranged on one side of the drive shaft 1, while a third power mechanism 12 and a fourth speed reduction mechanism 20 are arranged on the other side of the drive shaft 1. In this embodiment, the two sides of the drive shaft 1 have an asymmetric structure.

The fourth speed reduction mechanism 20 is connected at its input end to the third power mechanism 12, and is connected at its output end to the drive shaft 1. The third power mechanism 12 directly outputs power to the drive shaft 1 via the fourth speed reduction mechanism 20, combining with the power from the first power mechanism 2 to achieve power superposition.

The fourth speed reduction mechanism 20 includes at least one of a cylindrical gear speed reduction mechanism and a planetary gear speed reduction mechanism. As shown in FIG. 14, the fourth speed reduction mechanism 20 includes an eleventh gear, a twelfth gear, a thirteenth gear, and a fourteenth gear. The eleventh gear is connected to the third power mechanism 12, the twelfth gear is meshed with the eleventh gear, the twelfth gear is connected to the thirteenth gear via a fourth intermediate shaft, the thirteenth gear is meshed with the fourteenth gear, and the fourteenth gear is mounted around the drive shaft 1. Power from the third power mechanism 12 is transmitted to the drive shaft 1 after being subjected to a two-stage speed reduction. Optionally, the fourteenth gear and the sixth gear of the fifth speed reduction mechanism 21 may be the same gear.

In other embodiments, the first power mechanism 2, the first power distribution mechanism, the second power distribution mechanism, the second intermediate shaft 10, the first shift mechanism 3, and the second shift mechanism 4 are arranged on one side of the drive shaft 1, while a fourth power mechanism 13, a third shift mechanism 14, and a third intermediate shaft 15 are arranged on the other side of the drive shaft 1.

The third intermediate shaft 15 is provided with the third shift mechanism 14. A shift gear of the third shift mechanism 14 is in driving connection with the drive shaft 1. The fourth power mechanism 13 is in driving connection with the shift gear of the third shift mechanism 14.

The fourth power mechanism 13 outputs power to the drive shaft 1 via the third shift mechanism 14, combining with the power from the first power mechanism 2 to achieve power superposition.

The third shift mechanism 14 may be a bidirectional shift mechanism or a unidirectional shift mechanism.

This solution, through minor improvements, enables the expansion of a single-motor architecture to a dual-motor architecture.

To further meet the torque demands of heavy trucks, optionally, a wheel-side reducer 16 is provided on the drive shaft 1.

Optionally, the wheel-side reducer 16 is a planetary gear speed reduction mechanism, which may significantly reduce the torque transmitted by other cylindrical gears and reduce its overall dimension.

The electric drive axle provided in this solution is suitable for new energy vehicles.

Taking FIG. 1 as an example, power transmission paths for different gears are explained.

When first gear is engaged, the first shift element 43 of the second shift mechanism 4 engages the second shift gear 42, while the first shift mechanism 3 is in neutral. Through a four-stage speed reduction, the power transmission path is: the motor → G6 → G5 → G2 → G1 → G4 → G8 → G10 → the drive shaft 1.

When second gear is engaged, the second shift element 31 of the first shift mechanism 3 engages with the shift gear of the first shift mechanism 3, while the second shift mechanism 4 is in neutral. Through a four-stage speed reduction, the power transmission path is: the motor → G6 → G5 → G2 → G3 → G9 → G8 → G10 → the drive shaft 1.

When third gear is engaged, the first shift element 43 of the second shift mechanism 4 engages with the first shift gear 41, while the first shift mechanism 3 is in neutral. Through a two-stage speed reduction, the power transmission path is: the motor → G6 → G7 → G8 → G10 → the drive shaft 1.

In this embodiment, power transmission among the first power mechanism 2, the first intermediate shaft 5, the second intermediate shaft 10, and the drive shaft 1 is achieved through cylindrical gear transmissions, which is simple in structure and low in cost. Moreover, meshing relationships between gears are clear, allowing flexible and free gear ratio combinations.

A power take-off mechanism (not shown) may be disposed on any of the gears G1 to G7 as needed.

Optionally, the differential 17 is disposed on the drive shaft 1. The differential 17 allows driving wheels at both ends of the drive shaft 1 to rotate at different speeds. When the vehicle is turning or driving on uneven roads, the wheels at the both ends can roll at different speeds, improving the vehicle's driving and handling performance.

A differential lock may be disposed at the differential 17. The differential lock is a locking mechanism installed on a central differential, enhancing the vehicle's ability to traverse poor road surfaces. Specifically, when one wheel of a motor vehicle spins, the differential 17 is rapidly locked to create a rigid connection between the two wheels. This allows most or even all of the torque to be transmitted to the non-spinning wheel, fully utilizing its adhesion to generate sufficient traction, enabling the vehicle to continue moving.

When the drive axle provided in this solution is used on a 6×4 vehicle (indicating the vehicle has six wheels, of which four wheels are driving wheels), an Electric Axle Control Unit (eACU) for the electric drive axle allows for uninterrupted power transfer during gear shifting. Specifically, by precisely controlling torque output of two drive axles, when one axle temporarily disengages from driving during gear shifting, the other axle immediately increases its torque to compensate, ensuring a total driving torque delivered to the wheels remains essentially unchanged.

The following example illustrates the gear shifting, starting with an intermediate axle followed by a rear axle.

### First Phase: Power Handover Preparation

When determining that gear shifting is required at the intermediate axle, a drive motor of the intermediate axle rapidly and smoothly reduces its output torque.

Almost simultaneously, the drive motor of the rear axle increases its output torque by an amount nearly equal to the reduction from the intermediate axle, ensuring stable overall vehicle drive force.

### Second Phase: Intermediate Axle Gear Shift

When the torque of the intermediate axle is already reduced to a very low level, minimizing impact on the shift actuator, a transmission initiates disengagement and engagement to complete the gear shift on the intermediate axle, and then the torque of the intermediate axle gradually increases to an intermediate value and maintaining it.

The rear axle remains a main power source, ensuring vehicle power.

### Third Phase: Rear Axle Gear Shift

The rear axle reduces its torque, while the intermediate axle correspondingly increases its torque, completing another power handover to ensure overall torque stability.

When the torque of the rear axle is already reduced, the rear axle performs its shift operation.

After the gear shift on the rear axle is complete, both drive axles are in the new gear.

The system coordinates the two axles to output optimal torque based on driver demand (e.g., accelerator pedal opening) and vehicle state until the entire gear shifting process is complete.

This solution is also applicable for the gear shifting, starting with the rear axle followed by the intermediate axle.

Optionally, the power mechanism in this solution may be arranged closer to an axle housing, making it easier to fit within overall vehicle dimensional constraints.

The first power distribution mechanism is in driving connection with the second power distribution mechanism via a sixth speed reduction mechanism 22.

In an embodiment where the first power distribution mechanism includes an intermediate gear 7, a first gear 8, and a second gear 9, with the intermediate gear 7 and the first gear 8 arranged side-by-side and the intermediate gear 7 being in driving connection with the second gear 9, as shown in FIG. 17, the first gear 8 is connected to the first intermediate shaft 5 of the second power distribution mechanism via the sixth speed reduction mechanism 22.

In this embodiment, the sixth speed reduction mechanism 22 includes at least one of a cylindrical gear speed reduction mechanism and a planetary gear reduction mechanism.

An embodiment in which the sixth speed reduction mechanism 22 is a cylindrical gear speed reduction mechanism is shown in FIG. 17. In this embodiment, the sixth speed reduction mechanism 22 includes a second input gear 27 and a second output gear 26, which mesh with each other. The second input gear 27 is arranged to mesh with the first gear 8, and the second output gear 26 is connected to the first intermediate shaft 5.

In an embodiment where the first power distribution mechanism includes an intermediate gear 7, a first gear 8, and a second gear 9, with both the first gear 8 and the second gear 9 are arranged to mesh with the intermediate gear 7, the sixth speed reduction mechanism 22 is at least one of a cylindrical gear speed reduction mechanism and a planetary gear reduction mechanism.

FIGS. 15 and 16 illustrate an embodiment in which the sixth speed reduction mechanism 22 includes a first input gear 23 and a first output gear 24, with the first input gear 23 and the first output gear 24 meshing with each other. The first input gear 23 is connected to the first gear 8 via the first shaft 25, and the first output gear 24 is mounted on the first intermediate shaft 5. The first shaft 25 is located between an output shaft of the first power transmission mechanism 2 and the first intermediate shaft 5, and the first shaft 25 is parallel to the first intermediate shaft 5.

In a second aspect, a method for controlling the electric drive axle described in any of the above solutions is further provided according to the present application.

Since the electric drive axle has the aforementioned technical effects, the method for controlling the electric drive axle also has the same technical effects, which will not be repeated here.

The electric drive axle according to the present application includes a driving mode.

The Electric Axle Control Unit (eACU) controls the electric drive axle to operate in the driving mode. The eACU controls the motor controller to operate in a torque mode.

The eACU controls, based on current vehicle speed and torque, the first shift element 43 of the second shift mechanism 4 and the second shift element 31 of the first shift mechanism of the electric drive axle to perform gear shifting.

Vehicle speed is increased by using an accelerator pedal and decreased by using a brake pedal. The eACU controls the electric drive axle to upshift or downshift based on the current vehicle speed and torque.

Optionally, the second power distribution mechanism is configured to transmit power to the first shift mechanism 3 via the first speed reduction mechanism 19, and to the second shift gear 42 of the second shift mechanism 4 via the second speed reduction mechanism 6. A reduction ratio of the first speed reduction mechanism 19 is smaller than that of the second speed reduction mechanism 6.

Specifically, the second shift gear 42 of the second shift mechanism 4 is engaged with the first shift element 43 of the second shift mechanism 4, to engage first gear.

The second shift gear 42 is disengaged from the first shift element 43, while the second shift element 31 of the first shift mechanism 3 is engaged with the third shift gear of the first shift mechanism 3, to engage second gear.

The second shift element 31 is disengaged from the third shift gear, and the first shift gear 41 of the second shift mechanism 4 is engaged with the first shift element 43, to engage third gear. First gear is selected for starting or climbing hills.

Third gear is selected for high-speed driving and cruising.

The electric drive axle according to the present application also includes an escape mode.

The Electric Axle Control Unit (eACU) controls the electric drive axle to operate in the escape mode, the differential is locked and at the same time the second shift gear of the second shift mechanism of the electric drive axle is engaged with the first shift element of the second shift mechanism, thereby engaging first gear.

The eACU controls the motor controller to operate in a speed mode, and when the accelerator pedal is repeatedly released and depressed by a driver, the eACU determines a target rotational speed based on the accelerator pedal opening and determines a rotational direction based on the rate of change of the accelerator pedal opening, and sends the target rotational speed and the rotational direction to the motor controller, and the motor controller then controls the rotational speed and the rotational direction of the first power mechanism 2 of the electric drive axle such that the vehicle moves forward and backward in a reciprocating manner, gradually rocking the vehicle until it escapes the stuck condition.

Locking the differential specifically involves the eACU controlling operation of the differential to lock output gears of the differential to make left and right drive shafts rotate synchronously. When one drive axle spins, locking the differential creates a rigid connection between the two drive axles. This allows most or even all of the torque to be transmitted to the non-spinning axle, fully utilizing its adhesion to generate sufficient traction, aiding in vehicle escape.

When the second shift gear of the second shift mechanism is engaged with the first shift element of the second shift mechanism, the second shift gear 42 transmits power to the drive shaft 1, providing the maximum output torque from the electric drive axle, aiding in vehicle escape.

The eACU controls the motor controller to operate in the speed mode. The Motor have the torque mode and the speed mode. During normal driving, the motor controller operates in the torque mode. During escape, the motor controller operates in the speed mode.

In the escape mode, if the motor controller operates in the torque mode, due to the uncertain adhesion of the road surface, the available adhesion of the road surface cannot be estimated. Consequently, the required driving force cannot be determined. If the driving force exceeds the wheel-ground adhesion, driving wheel spin will worsen, increasing the difficulty of escape the stuck condition. If the driving force is less than the wheel-ground adhesion, it will be insufficient for escape.

In this solution, the speed mode is selected for the escape mode. In the speed mode, the vehicle rotates at a preset rotational speed.

The rate of change of the accelerator pedal opening is defined as a difference in the accelerator pedal opening between adjacent release/depress operations. When the rate of change is positive, the rotational direction of the first power mechanism 2 is defined as a first direction, and when the rate of change is negative, the rotational direction of the first power mechanism 2 is defined as a second rotational direction. The first direction and the second direction are opposite. Optionally, the first direction is a forward rotational direction, and the second is a reverse rotational direction.

Specifically, when the accelerator pedal is depressed by the driver, the accelerator pedal opening increases and the rate of change of the accelerator pedal opening is positive, the motor of the first power mechanism 2 rotates forward, driving the vehicle to move forward. For example, when the accelerator pedal opening increases from 10% to 20%, the rate of change of the accelerator pedal opening is +10%.

When the driver releases the accelerator pedal, the accelerator pedal opening decreases and the rate of change of the accelerator pedal opening is negative, the motor of the first power mechanism 2 rotates in reverse, driving the vehicle to move backward. For example, when the accelerator pedal opening decreases from 20% to 10%, the rate of change of the accelerator pedal opening is -10%.

In this solution, the rate of change of the accelerator pedal opening is used as the signal to control the motor's forward or reverse rotation. This facilitates the driver control over vehicle forward or backward movement, allowing for forward or backward movement in both forward and reverse gears, avoiding erroneous operation on one hand and increasing flexibility in escape operation on the other hand. The rate of change of the accelerator pedal opening does not control the motor speed; only the opening itself controls the rotational speed.

During escape, the driver manually operates the eACU to control the electric drive axle to operate in the escape mode. The eACU then controls the motor controller to operate in the speed mode. The driver first depresses the accelerator pedal to a first opening, to move the vehicle forward. The driver perceives the driving force provided by the road surface during this forward movement. Subsequently, the driver releases the accelerator pedal to a second opening, to move the vehicle backward. The driver perceives the driving force provided by the road surface during this backward movement.

For example, when the vehicle is stationary and the accelerator pedal is not depressed by a driver, the opening is 0% and the rate of change of the opening is 0%. When the accelerator pedal is depressed by the driver to have a first opening of 50% and a rate of change of the opening of +50%, the motor rotates forward, and the vehicle moves forward. When the accelerator pedal is released by the driver to have a second opening of 40% and a rate of change of the opening of -10%, the motor rotates in reverse and the vehicle moves backward.

If the driver perceives insufficient driving force during forward movement and depresses the accelerator pedal again, a first opening is set to 55% with the rate of change of the opening of +15%, the motor rotates forward, and the vehicle moves forward. When the driver releases the accelerator pedal, if the driver perceives insufficient driving force during backward movement, a second opening is set to 50% with the rate of change of the opening of -5%, the motor rotates in reverse, and the vehicle moves backward. If the driver perceives excessive driving force during backward movement, the second opening is set to 35% with the rate of change of the opening of -20%, the motor rotates in reverse.

If the driver perceives excessive driving force during forward movement and depress the accelerator pedal again, a first opening is set to 45% with the rate of change of the opening of +5%, the motor rotates forward, and the vehicle moves forward. When the driver releases the accelerator pedal, if the driver perceives insufficient force during backward movement, a second opening is set to 43% with the rate of change of the opening of -2%, the motor rotates in reverse, and the vehicle moves backward. If the driver perceives excessive driving force during backward movement, the second opening is set to 35% with the rate of change of the opening of -10%, the motor rotates in reverse.

By controlling the accelerator pedal opening, the amplitude of the vehicle's rocking within a ground depression is gradually increased until escape.

This solution allows the driver to flexibly adjust the accelerator pedal opening based on the perceived driving force during forward and backward movements until escape.

The driver can also completely release the accelerator pedal, allowing the vehicle to rock under gravity within the depression.

Optionally, the first opening may begin at a small opening and gradually increase. After perceiving drive force at a certain opening, the driver may try multiple times within a certain range around that opening.

The target rotational speed is determined. Specifically, a relationship table between the accelerator pedal opening and the target rotational speed may be established and stored in the eACU.

The target rotational speed is then determined based on the relationship table between the accelerator pedal opening and the target rotational speed.

The table is as follows:

| | | | | | | |
|---|---|---|---|---|---|---|
| Positive rate of change of accelerator pedal opening | Accelerator pedal opening (%) | 0 | 25 | 50 | 75 | 100 |
| | Target rotational speed n (r/min) | 0 | 500 | 1000 | 2000 | 3000 |
| Negative rate of change of accelerator pedal opening | Accelerator pedal opening (%) | 0 | 25 | 50 | 75 | 100 |
| | Target rotational speed n (r/min) | - 0 | - 500 | - 1000 | - 2000 | - 3000 |

(The data in the table represents only one embodiment; the relationship between the accelerator pedal opening and the target rotational speed is not limited to the above embodiment.)

The determination of the target rotational speed is not limited to using the relationship table. Other methods such as algorithms or formulas may be used, which may be chosen by those skilled in the art based on vehicle conditions and actual situations, and are not specifically limited here.

By allowing the driver to adjust the accelerator pedal opening based on perceived driving force during escape, this solution offers lower cost and higher reliability compared with the related art relying on sensors for escape.

Further, the driver can also adjust frequency of depressing and releasing the accelerator pedal based on road conditions to assist in escape.

The method for controlling the electric drive axle provided in this solution also includes: when the driver perceives that the wheel-ground adhesion force during backward movement is greater than that during forward movement, reverse gear is engaged; and when the wheel-ground adhesion force during backward movement is less than that during forward movement, forward gear is engaged.

Using forward or reverse gear in coordination assists in escape.

The drive axle provided in this solution also includes an energy recovery mode.

In step S100, the eACU controls the electric drive axle to operate in the energy recovery mode when the vehicle decelerates.

In step S200, based on the motor speed and torque in current gear, motor speeds and torques for other gears are determined.

In step S300, based on a motor efficiency MAP, motor efficiencies corresponding to the motor speeds and torques for different gears are determined.

In step S400, a battery State of Charge (SOC) is determined, and a gear is selected.

In step S500, the eACU repeats steps S200-S400 once every at least one control step length.

Here, the control step length refers to the cycle period between successive executions of the complete control logic sequence (i.e., steps S200 to S400) by the eACU.

It is assumed that the current gear of the drive axle is second gear, gear ratios of three gears are i1, i2, i3, respectively, and the motor speed and torque in the current gear are n2 and T2, respectively. The motor speed and torque in the current gear can be read by the eACU.

In first gear, the motor speed is n1 = n2 * i1 / i2, and the torque is T1 = T2 * i2 / i1.

In third gear, the motor speed is n3 = n2 * i3 / i2, and the torque is T3 = T2 * i2 / i3.

The method for determining the motor speeds and torques for other gears is not limited to the above embodiments and may include other methods, all of which fall within the scope of protection of the present application.

The motor efficiency MAP has motor speed on the horizontal axis and torque on the vertical axis. The point corresponding to a motor speed-torque pair gives the motor efficiency. Motor speeds and torques for other gears are calculated from the current gear, and then motor efficiencies for different gears are determined from the motor efficiency MAP.

A battery State of Charge (SOC) is determined and a gear is selected based on the battery SOC.

SOC (State Of Charge) reflects remaining battery capacity, defined numerically as a ratio of remaining capacity to battery capacity, usually expressed as a percentage (0%-100%). SOC=0% indicates the battery is fully discharged, while SOC=100% indicates the battery is fully charged.

Specifically, when the battery SOC is less than a first preset value, a gear with highest motor efficiency is selected to charge the battery. When the battery SOC is greater than or equal to the first preset value, a gear with lowest motor efficiency is selected, without charging the battery.

In some embodiments, the first preset value is 90%.

The electric drive axle provided in this solution also includes a park mode.

The eACU controls the electric drive axle to operate in the park mode, and the shift elements are shifted into Park (P).

The eACU controls the second shift element 31 of the first shift mechanism to engage the third shift gear.

The eACU controls the first shift element of the second shift mechanism to engage the first shift gear or the second shift gear.

In the park mode, the third shift gear of the first shift mechanism and one of the shift gears of the second shift mechanism are locked.

The above description presents only preferred embodiments of the present application and explanations of the applied technical principles, and is not intended to limit the present application. Various changes and variations are possible for those skilled in the art. The scope of the claims in this application is not limited to the technical solutions formed by specific combinations of the above-described technical features, but also encompasses other technical solutions formed by any combination of the aforementioned technical features or their equivalents without departing from the inventive concept, for example, technical solutions formed by interchanging the above features with technical features having similar functions (but not limited to those) provided in this application.

## Claims

1. An electric drive axle, **characterized by** comprising:
a first power mechanism (2);
a first power distribution mechanism;
a second power distribution mechanism;
a second intermediate shaft (10);
a first shift mechanism (3);
a second shift mechanism (4); and
a drive shaft (1),
wherein the first power distribution mechanism is configured to distribute power from the first power mechanism (2) with speed reduction to the second power distribution mechanism and to a first shift gear (41) of the second shift mechanism (4);
the second power distribution mechanism is configured to distribute power with speed reduction to the first shift mechanism (3) and to a second shift gear (42) of the second shift mechanism (4);
the first shift mechanism (3) is configured to transmit power to the drive shaft (1); and
the second shift mechanism (4) is mounted on the second intermediate shaft (10) that is in driving connection with the drive shaft (1).

2. The electric drive axle according to claim 1, wherein the first power distribution mechanism comprises an intermediate gear (7), a first gear (8), and a second gear (9);
the first power mechanism (2) is in driving connection with the intermediate gear (7); and
both the first gear (8) and the second gear (9) are meshed with the intermediate gear (7), the first gear (8) is in driving connection with the second power distribution mechanism, and the second gear (9) is in driving connection with the first shift gear (41) of the second shift mechanism (4).

3. The electric drive axle according to claim 2, wherein the intermediate gear (7), the first gear (8), and the second gear (9) are arranged such that their axes are parallel to one another, the intermediate gear (7) is located between the first gear (8) and the second gear (9), the first gear (8) is arranged to mesh with the intermediate gear (7) on one axial side of the intermediate gear (7), and the second gear (9) is arranged to mesh with the intermediate gear (7) on the other axial side of the intermediate gear (7); or
along an axial direction of the intermediate gear (7), the first gear (8) and the second gear (9) are arranged with axial offset relative to each other, and an axial width of the intermediate gear (7) is at least equal to the sum of axial widths of the first gear (8) and the second gear (9).

4. The electric drive axle according to claim 1, wherein the first power distribution mechanism comprises an intermediate gear (7), a first gear (8), and a second gear (9);
along an axial direction of an output shaft of the first power distribution mechanism (2), the intermediate gear (7) and the first gear (8) are arranged side-by-side; and
the intermediate gear (7) is in driving connection with the second gear (9), and the first gear (8) is in driving connection with an input end of the second power distribution mechanism.

5. The electric drive axle according to claim 1, wherein the first power distribution mechanism is in driving connection with the second power distribution mechanism via a sixth speed reduction mechanism (22).

6. The electric drive axle according to claim 1, wherein the second power distribution mechanism comprises:
a first intermediate shaft (5) which is in driving connection with the first power distribution mechanism; and
a second speed reduction mechanism (6) which is in driving connection with the first intermediate shaft (5) and the second shift gear (42) of the second shift mechanism (4),
wherein the first shift mechanism (3) is disposed on the first intermediate shaft (5), or a first speed reduction mechanism (19) is disposed on the first intermediate shaft (5) and is connected to the first shift mechanism (3).

7. The electric drive axle according to any one of claims 1 to 6, wherein the second intermediate shaft (10) is arranged parallel to the drive shaft (1) and is connected to the drive shaft (1) via a fifth speed reduction mechanism (21), or the second intermediate shaft (10) is mounted around the drive shaft (1) and is connected to the drive shaft (1) via a planetary gear speed reduction mechanism; or
the first power mechanism (2) is in driving connection with the first power distribution mechanism via a third speed reduction mechanism (18).

8. The electric drive axle according to any one of claims 1 to 6, wherein the electric drive axle further comprises a second power mechanism (11) configured to output power to the second power distribution mechanism or the first power distribution mechanism, or
the electric drive axle further comprises a third power mechanism (12) and a fourth speed reduction mechanism (20), wherein the third power mechanism (12) is connected to an input end of the fourth speed reduction mechanism (20), and an output end of the fourth speed reduction mechanism (20) is connected to the drive shaft (1), or
the electric drive axle further comprises a fourth power mechanism (13), a third shift mechanism (14), and a third intermediate shaft (15), wherein the third intermediate shaft (15) is provided with the third shift mechanism (14), the third shift mechanism (14) has a shift gear that is in driving connection with the drive shaft (1), and the fourth power mechanism (13) is in driving connection with the shift gear of the third shift mechanism (14).

9. A method for controlling the electric drive axle according to any one of claims 1 to 8, wherein the electric drive axle comprises a driving mode, and the method comprises:
controlling, by an electric axle control unit, the electric drive axle to operate in the driving mode; and
based on current vehicle speed and torque, controlling, by the electric axle control unit, a first shift element (43) of the second shift mechanism (4) and a second shift element (31) of the first shift mechanism of the electric drive axle to perform gear shifting,
wherein to engage first gear, the second shift gear (42) of the second shift mechanism (4) is engaged with the first shift element (43) of the second shift mechanism (4);
to engage second gear, the second shift gear (42) is disengaged from the first shift element (43), while the second shift element (31) of the first shift mechanism (3) is engaged with a third shift gear of the first shift mechanism (3); and
to engage third gear, the second shift element (31) is disengaged from the third shift gear, and the first shift gear (41) of the second shift mechanism (4) is engaged with the first shift element (43).

10. The method for controlling the electric drive axle according to claim 9, wherein the electric drive axle further comprises an escape mode, and the method further comprises:
controlling, by the electric axle control unit, the electric drive axle to operate in the escape mode;
locking a differential of the electric drive axle, and engaging the second shift gear (42) of the second shift mechanism (4) with the first shift element (43) of the second shift mechanism (4), to engage first gear;
controlling, by the electric axle control unit, a motor controller to operate in a speed mode;
determining, by the electric axle control unit, a target rotational speed based on an accelerator pedal opening and a rotational direction based on a rate of change of the accelerator pedal opening when the accelerator pedal is repeatedly released and depressed by a driver;
sending, by the electric axle control unit, the target rotational speed and the rotational direction to the motor controller; and
controlling, by the motor controller, a rotational speed and a rotational direction of the first power mechanism (2) of the electric drive axle, such that a vehicle having the electric drive axle moves forward and backward in a reciprocating manner,
wherein the rate of change of the accelerator pedal opening is defined as a difference in the accelerator pedal opening between adjacent release/depress operations, wherein when the rate of change of the accelerator pedal opening is positive, the rotational direction of the first power mechanism (2) is defined as a first direction, and when the rate of change of the accelerator pedal opening is negative, the rotational direction of the first power mechanism (2) is defined as a second direction, wherein the first direction and the second direction are opposite.

11. The method for controlling the electric drive axle according to claim 10, further comprising:
establishing a relationship table between the accelerator pedal opening and the target rotational speed, and storing it in the electric axle control unit; and
determining the target rotational speed, specifically, determining the target rotational speed by the electric axle control unit based on the relationship table between the accelerator pedal opening and the target rotational speed.

12. The method for controlling the electric drive axle according to claim 10, wherein when a wheel-ground adhesion force during backward movement is greater than that during forward movement, reverse gear is engaged; and
when the wheel-ground adhesion force during backward movement is less than that during forward movement, forward gear is engaged.

13. The method for controlling the electric drive axle according to claim 11, wherein the electric drive axle further comprises an energy recovery mode, and the method further comprises:
controlling, by the electric axle control unit, the electric drive axle to operate in the energy recovery mode when a vehicle having the electric drive axle decelerates;
based on motor speed and torque in current gear, determining motor speeds and torques for other gears;
based on a motor efficiency map, determining motor efficiencies corresponding to motor speeds and torques for different gears;
determining a battery state of charge and selecting a gear; and
repeating, by the electric axle control unit, the determining motor speeds and torques for other gears, the determining motor efficiencies corresponding to motor speeds and torques for different gears, and the determining a battery state of charge and selecting a gear once every at least one control step length.

14. The method for controlling the electric drive axle according to claim 13, wherein when the battery state of charge is less than a first preset value, a gear with highest motor efficiency is selected; and when the battery state of charge is greater than or equal to the first preset value, a gear with lowest motor efficiency is selected.

15. The method for controlling the electric drive axle according to claim 11, wherein the electric drive axle further comprises a park mode, and the method further comprises:
controlling, by the electric axle control unit, the electric drive axle to operate in the park mode;
shifting the shift elements into Park (P);
controlling, by the electric axle control unit, the second shift element (31) of the first shift mechanism (3) to engage the third shift gear; and
controlling, by the electric axle control unit, the first shift element of the second shift mechanism (4) to engage the first shift gear (41) or the second shift gear (42).
